# EUROPEAN PATENT SPECIFICATION

(11) **EP 2 845 173 B1**
(45) Date of publication and mention of the grant of the patent: **10.04.2024**
(21) Application number: 13719153.2
(22) Date of filing: 25.04.2013
(51) Int. Cl.: G07B 15/02, G07B 15/04, G07C 9/00, G06K 19/077

(54) **TICKET VALIDATION APPARATUS AND METHOD**
TICKETVALIDIERUNGSVORRICHTUNG UND -VERFAHREN
PROCÉDÉ ET APPAREIL DE VALIDATION DE TICKET

(30) Priority: 02.05.2012 GB 201207692
(43) Date of publication of application: 11.03.2015
(73) Proprietor: Itso Limited, Milton Keynes, Buckinghamshire MK13 8LW (GB)
(72) Inventor: STANFORD, Christopher John, Harpenden Hertfordshire AL5 3BW (GB)
(74) Representative: Marks & Clerk LLP
(86) International application number: PCT/GB2013/051051
(87) International publication number: WO 2013/164579

(56) References cited:
- WO-A1-2006/016323
- WO-A2-2008/009654
- JP-A- 2006 309 630
- US-A1- 2002 070 862
- US-A1- 2006 170 533
- US-A1- 2008 297 310
- US-A1- 2010 308 957
- US-A1- 2012 096 249

## Description

### Field of the Invention

Embodiments of the present invention relate to electronic ticketing systems, for example for transport systems.

### Background

Contactless smart cards are widely used in ticketing systems, for example in public transport systems. The implementation of such systems generally involves card readers at fixed locations, for example on stations, or located on vehicles, such as buses. To use such a system, a passenger carries a smart card and presents the smart card to a reader when entering a station or boarding a bus. The infrastructure to implement such an electronic ticketing system can be expensive to implement since it requires the introduction of a large number of readers of smart cards. Additionally, the readers must include a facility to contact a central accounting system.

Aspects of the present invention are intended to address the problem described above and other problems with existing ticketing systems.

WO 2006/106323 relates to a method for obtaining tickets for journeys in a passenger transportation system which comprises stations for entering and/or leaving transport means of the system for journeys between the stations, wherein at least one station of the system is assigned at least one contactlessly readable data carrier and/or at least one transport means of the system is assigned at least one contactlessly readable data carrier, wherein the contactlessly readable data carriers contain ticket information items, and one of the contactlessly readable data carriers is read by a mobile reader in at least one station and/or in at least one transport means, and the corresponding ticket information item or items is/are stored in the mobile reader.

WO 2008/009654 relates to methods for selecting and stamping electronic tickets by an electronic terminal capable of near field communication, in particular by a mobile telephone. The invention also relates to a ticket terminal for stamping electronic tickets.

US 2012/096249 relates to a computer-implemented method that includes storing a plurality of acceleration profiles in a mobile device; receiving accelerometer data from an accelerometer in the mobile device; correlating the accelerometer data with one accelerometer profile in the plurality of accelerometer profiles; and activating a user application of the mobile device that is associated with the correlated accelerometer profile. Each acceleration profile can correspond to a sequence of acceleration forces a mobile device would be subjected to when carried with a user during an activity that corresponds to the correlated acceleration profile.

### Summary of the Invention

According to a first aspect of the present invention, there is provided an electronic ticketing system in accordance with claim 1.

The electronic ticketing system is associated with a transport system. The portable electronic devices can be for example a smart phone carried by a passenger and running a suitable application or app. Since smart phones are widely used and may include a functionality to read smart cards though a near field communications coil, it is envisaged that embodiments of the present invention would allow electronic ticketing systems to be implemented using in part the reading and communications functions already available in smart phones. Therefore in such a system, the requirement for ticket gates that can read smartcards and also for smartcard readers located on for example buses is reduced. In the system of embodiments of the present invention, such smart card readers are in effect replaced by smart cards.

In an embodiment, a machine readable tag is coupled to a device configured to provide an indication of the user's eligibility to for the service and / or to allow the user to access the service. For example, the machine readable tag may be coupled to a display or alarm which indicates if the user has a valid ticket stored on their device. Alternatively, or additionally, the machine readable tag may be coupled to an entry or exit gate.

According to a second aspect of the present invention, there is provided a method in a portable electronic device according to claim 3.

The portable electronic device may add a time stamp to the log file.

According to an embodiment, there is provided a computer program product comprising processor executable instructions which, when executed on a processor, cause the processor to carry out a method as described above.

The computer program product may be embodied in a carrier medium, which may be a storage medium or a signal medium. A storage medium may include optical storage means, or magnetic storage means, or electronic storage means.

It is envisaged that the methods may be implemented by software executable by an application running on a portable electronic device such as a smart phone. Aspects can be embodied in a software product, either as a complete software implementation, or as an add-on component for modification or enhancement of existing software (such as a plug in). Such a software product could be embodied in a carrier medium, such as a storage medium (e.g. an optical disk or a mass storage memory such as a FLASH memory) or a signal medium (such as a download). Specific hardware devices suitable for the embodiment could include an application specific device such as an ASIC, an FPGA or a DSP, or other dedicated functional hardware means.

According to a third aspect of the present invention, there is provided a portable electronic device according to claim 6.

### Brief Description of the Drawings

In the following, embodiments of the present invention will be described as non-limiting examples, with reference to the accompanying drawings in which
Figure 1 shows an overview of an electronic ticketing system;
Figure 2 shows an example of a two-leg journey in a transport system;
Figure 3 shows a smart phone executing a personal validation terminal application;
Figure 4 shows an implementation of a virtual ticket machine;
Figure 5 shows components of a machine readable tag;
Figure 6 shows connections to a machine readable tag;
Figure 7 shows a double sided machine readable tag;
Figure 8 is a table showing data stored on a smart card in a check-in/check-out tag;
Figure 9 is a table showing data stored on a smart card in a be-on tag;
Figure 10 is a table showing the data stored in a secondary table of a tag;
Figure 11 is a table showing the data stored in a secondary table of a tag;
Figure 12 is a table showing the data stored in a secondary table of a tag;
Figure 13 is a table showing the data stored in a secondary table of a tag;
Figure 14 shows a portable electronic device;
Figure 15 shows a flowchart illustrating steps involved in a method executed on a portable electronic device;
Figure 16 is a table showing data stored on a portable electronic device;
Figures 17a-17c show information displayed on a smart phone;
Figures 18a-18c show information displayed on a smart phone; and
Figure 19 illustrates changes in status of an application running on a portable electronic device.

### Detailed Description

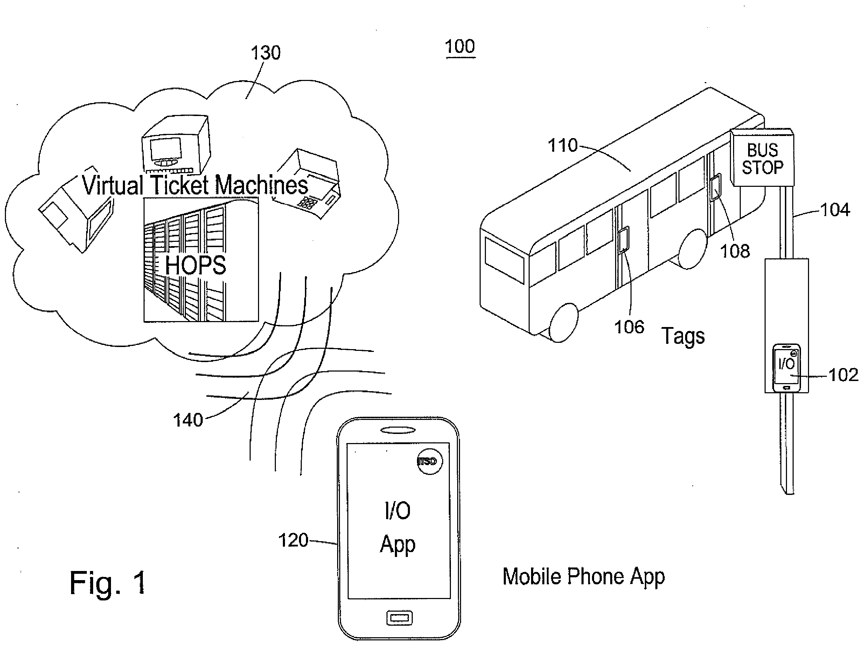

Figure 1 shows an overview of an electronic ticketing system 100 according to an embodiment of the present invention. A machine readable tag 102 is attached to a bus stop 104. Further machine readable tags 106, 108 are attached to a bus 110. A mobile phone 120 is operable to read the machine readable tags 102, 106 and 118. The mobile phone 120 is connected to a server 130 over a network 140. The server 130 acts as a virtual ticketing machine and is referred to in the following as a host operator or processing system (HOPS).

A passenger travelling on the bus 110 reads the machine readable tag 102 using the mobile phone 120 before boarding the bus 110. Alternatively or additionally, the passenger may read one of the tags 106 and 108 after boarding the bus. The mobile phone 120 sends a message to the server 130 during the journey or after the journey is completed. The server 130 stores a record of the journey and facilitates any transactions that need to be made with regard to payment for the journey.

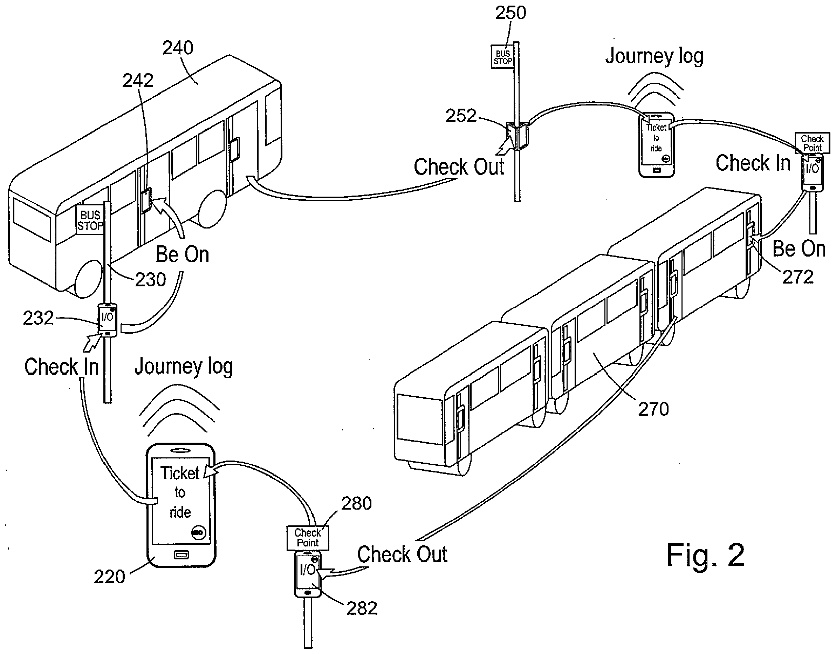

Figure 2 shows a typical two leg journey using the system described above. A passenger travelling on the journey carries a smart phone 220 which executes a personal validation terminal (PVT) application. The passenger checks in at a bus stop 230 by touching the smart phone 220 against a machine readable tag 232. In response to reading the machine readable tag 232, the smart phone 220 updates a status of the PVT application to "checked-in" and registers the location of bus stop 230 as the check-in location should a journey subsequently take place. The system operation is not affected by multiple touches of machine readable tags at the same location.

The PVT application may also provide, via a graphical user interface of the smart phone 220, details read from the machine readable tag 232 of bus services available from bus stop 230 and their destination. The machine readable tag 232 may also provide links to other real time information such as the current status of bus services from bus stop 230 or other information about the transport network.

The PVT application executed on smart phone 220 authenticates the tag data as genuine, reads the location of bus stop 230 from tag 232 and records the location information against a time stamp provided by an internal clock of smart phone 220.

If the traveller decides not to travel from bus stop 232, for example if there are no services which the traveller wishes to travel on from that stop, then the traveller may merely check-in at another place before boarding any vehicle. Further, in any event the check-in will be ignored after a predetermined period of time if no further changes are registered by the PVT application executed on smart phone 220.

When a bus 240 arrives at the bus stop 230 which the passenger boards, the passenger reads a machine readable tag 242 affixed inside the bus using their smart phone 220. The bus 240 may have several machine readable tags 242 affixed in different locations to facilitate speedy boarding of the bus. As mentioned above, the operation of the application in smart phone 220 is not affected by multiple touches of a tag in the same vehicle.

In response to reading the tag 242, the smart phone 220 authenticates the tag and records, alongside a time stamp provided by the smart phone details read from the tag in the bus. These details include for example the identity of the bus operator and the bus service taken. The smart phone may also provide via a display details of possible fares which are read from the tag 242.

If the passenger has elected to pre-purchase a product which is not valid on the particular bus service of bus 240, then the smart phone 220 may display a message advising against continued travel unless an alternative payment method is also present.

Once the bus 240 reaches its destination bus stop 250, the passenger checks out by reading a machine readable tag 252 attached to bus stop 250 with smart phone 220. At this point the PVT application running on smart phone 220 authenticates the tag 252 determines the extent of the leg of the journey and compiles a journey log. The journey log is sent by the smart phone 220 over a network to the virtual ticket machine server 130 described in relation to figure 1.

Once the leg of the journey is complete, the application running on smart phone 220 displays to the user confirmation that the journey is complete and may also display an indication of the fare charged.

In the following, a further journey, this time using a train will be described. The user of smart phone 220 begins their journey by checking in at a checkpoint 260 by reading a tag 262 attached to the checkpoint 260. The PVT application running on smart phone 220 authenticates that the tag 262 is genuine reads the check-in location from the tag 262 and records the check-in location alongside a time stamp provided by smart phone 220. As described above, the tag 262 may also provide the smart phone 220 with information such as rail services available from a platform in the vicinity of check-in location 260. The tag 262 may also provide links to websites containing information about the current status of services from platforms in the vicinity of location 260.

Once a desired train 270 arrives, the traveller boards the train and logs into the train 270 by reading a tag 272 attached to the train 270.

The PVT application on smart phone 220 authenticates the tag and records details read from the tag alongside a date time stamp. The details read from tag 272 may include information of the operator of train 270, information concerning the class of travel and the service taken. At this point in the journey, the graphical user interface of smart phone 220 may display to the passenger details of possible fares read from the tag.

Further, the PVT application executed on smart phone 220 may compare tickets stored on the smart phone 220 with data stored on the tag 272. In response to this comparison, the smart phone may provide an indication to the user that they have a valid ticket to travel on this typical train. Alternatively, the PVT application running on smart phone 220 may indicate to the user that the tickets stored on the phone 220 are not valid for travel on train 270. Alternatively, the PVT application may indicate to the passenger that the ticket stored on smart phone 220 is valid for travel in a different carriage of train 272.

Once train 270 reaches destination 280, the passenger disembarks from the train and checks out by reading a tag 282 located at a checkpoint 280 at the destination. At this point the PVT application running on smart phone 220 authenticates the tag, and using information read from tag 282 compiles a journey log and then when network coverage is available sends the journey log to a virtual ticket machine server over the mobile network.

In response to receiving the indication of a journey log over the network, the virtual ticket machine server generates a record of the journey.

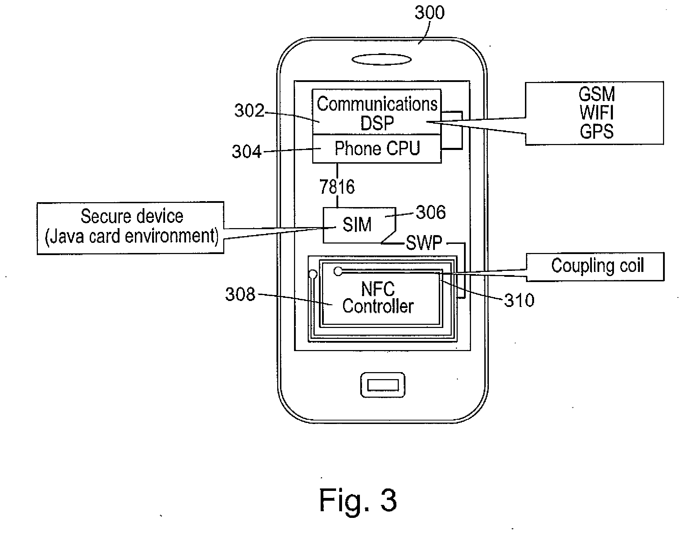

Figure 3 shows a smart phone 300 which when executing a personal validation terminal (PVT) application, facilitates the ticketing method described above. The smart phone 300 has a communications digital signal processor 302 which provides mobile communications functionality, for example using the GSM standard. The communications digital signal processor 302 may also provide wireless Internet communications and global positioning system functionality. The smart phone 300 has a phone CPU 304 which executes the PVT application. The smart phone 300 has a secure storage device 306. The secure storage device 306 may be part of the SIM card of smart phone 300. The smart phone 300 also has a near field communications (NFC) facility provided by NFC controller 308 and coupling coil 310. The coupling coil 310 allows smart phone 300 to send information to and receive information from smart cards. For example this may be accomplished using the ISO/IEC 14443 standard interface. Since this interface is also used for existing ticketing systems in which the communications facilities are attached to the check-in check-out locations, systems using such communications facilities would be backwardly compatible with existing systems.

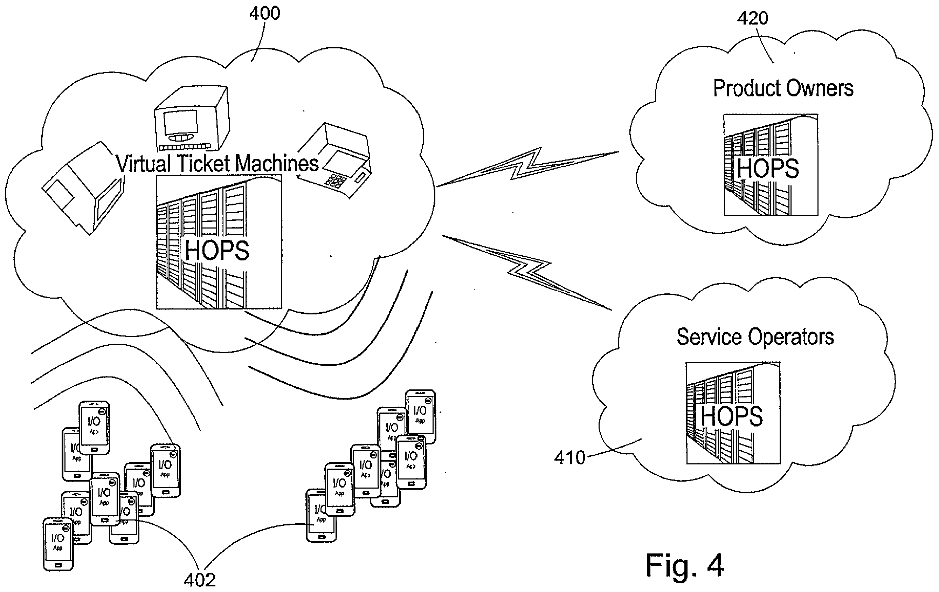

Figure 4 shows a possible implementation of a virtual ticket machine or HOPS server. A virtual ticket machine server 400 receives and transmits messages to a large number of smart phones 402. The message is transmitted from the smart phones 402 to the server 400 may include journey logs as described in the paragraphs above. The function of a ticket machine in a conventional ticketing system is split between the virtual ticket machine server 400 and the PVT application running on a smart phone. The virtual ticket machine server 400 collates usage of the transport network determines fares and settles fares with service operators 410. The virtual ticket machine server 400 may also facilitate charging of fares to product owners 420.

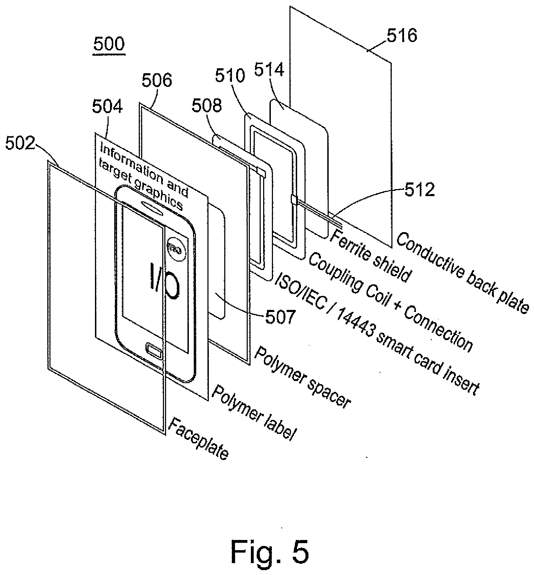

Figure 5 shows the components of a machine readable tag 500 in accordance with an embodiment of the present invention. The machine readable tag 500 is readable using protocols defined in the ISO/IEC 14443 standard. A face plate 502 is made from a transparent material, for example, polycarbonate. The face plate 502 forms a scratch and vandal resistant layer which protects the layers behind it. A label 504 is formed behind the face plate 502. The label 504 contains printed information such as a target outline which indicates to a user where a smart phone should be presented in order to read the tag 500. The label layer 504 is formed from a polymer. The label 504 may display promotional logos. Behind the label 504 there is a polymer spacer 506. The polymer spacer 506 has a pocket 507 which holds components of the tag.

A smart card insert 508 is located in the pocket 507 formed by polymer spacer 506. The smart card insert 508 consists of an ID 1 microprocessor smart card insert or a complete plastic card. The smart card draws its power from a source such as a near field communications enabled mobile phone or equivalent device using the ISO/IEC 14443 standardized interface.

The information stored on the smart card 508 is discussed in more detail below. The information stored in the smart card includes an indication of the location of the tag 500, this may be for example a fixed location on a bus stop or check-in point in a station, or a movable location such as on a bus or on a train carriage. The smart card may store national public transport access node (NAPTAN) information. This information uniquely indentifies points on the UK public transport network. Of course those of skill in the art will understand that the smart card may contain corresponding information for the national public transport information of a different country or an alternative indication of the location of the tag. The smart card 508 supports mutual authentication with a presented mobile phone or other device. The smart card 508 may have a memory which can store secure log files.

Behind the smart card 508 there is located a coupling coil 510. The coupling coil 510 is separate from the antenna of smart card 508. The coupling coil 510 has a connection 512 which allows a device such as a customer's smart phone to send signals to other equipment attached at connection 512 or for equipment attached at connection 512 to send data to a smart phone.

The coupling coil 510 allows the tag 500 to support a smart phone sending signals to external equipment which is ignored by the smart card. This may support for example allowing a smart phone or an application running on a smart phone to open or close gates to enable access control, to display information on a display, or to sound an alarm. The smart card 508 may control access to the coil 510. For example, if a mobile phone provides correct authentication details to the smart card 508, the smart card may allow the mobile phone to access the coupling coil and to therefore operate ticketing gates to allow the holder of the smart phone to access a public transport network.

A Ferrite shield 514 is located behind the coupling coil 510. The smart card insert 508, the coupling coil 510 and the Ferrite shield 514 are all sized to fit within the pocket 507 of the polymer spacer 506. The Ferrite shield 514 has two functions. The first function is to focus the variety of active field shapes generated by smart phones and to energise the smart card 508 in the most efficient manner. Secondly, the Ferrite shield 514 functions to minimize the effects of power drain into any conductive material behind or near the edges of the smart card 508 and the coupling coil 510. Behind the polymer spacer 506 there is a back plate 516. The back plate 516 is made of a plastic coated conductive material. The back plate 516 is used to screen the tag 508 from stray fields behind the tag. The back plate 516 also provides a base for a variety of fixing methods. When coupled with the Ferrite shield 514, the back plate 516 provides a relatively constant radio frequency environment for operation of the tag 500. This means that the operation of the tag 500 is independent of how or where it is fitted. The back plate 516 is provided with fixing points that allow a variety of attachments to be added depending on the location of the tag 500. For example the tag 500 may be pole mounted, surface mounted or fitted into or onto equipment housing.

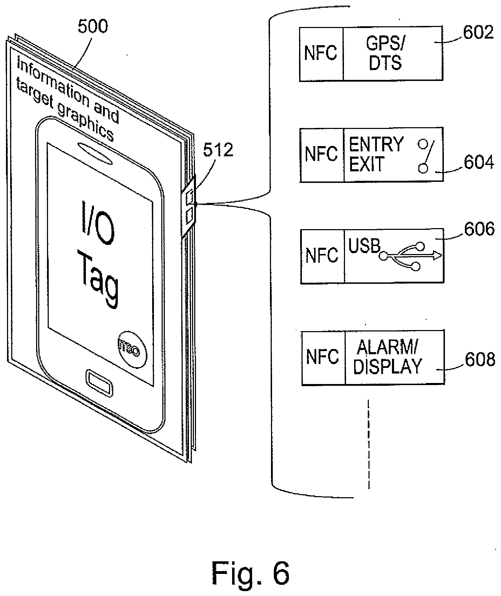

Figure 6 shows external devices connected to the machine readable tag 500 via the connection 512 to the coupling coil. The machine readable tag 500 may be connected to a Global Positioning System (GPS) device 602. The machine readable tag 500 may be connected to an entry/exit gate 604. When the machine readable tag 500 is connected to an entry/exit gate 604, the smartcard 508 within the machine readable tag 500 controls access to the entry/exit gate 604. Therefore depending on whether a passenger's smart phone has a correct ticket or authorisation for the passenger to use a particular service, the smartcard 508 within the machine readable tag 500 allows or denies the smart phone access to the coupling coil 510 and therefore controls whether the smart phone opens the entry/exit gate 604.

The connector 512 may be connected to a data connection 606 which allows connection through a Universal Serial Bus (USB) connection. The data connection 606 may allow control of a variety of external devices, or alternatively may allow an external device such as a computer to be connected to the machine readable tag 500 in order to write data to the machine readable tag 500.

The connector 512 may be connected to a display or alarm 608. This may be the case if the machine readable tag 500 is located on a bus or similar vehicle. The display or alarm 608 would then indicate to the driver or conductor on the bus whether the holder of the smart phone has a valid ticket for the bus service based on the result of the data exchange between the passenger's smart phone and the machine readable tag 500.

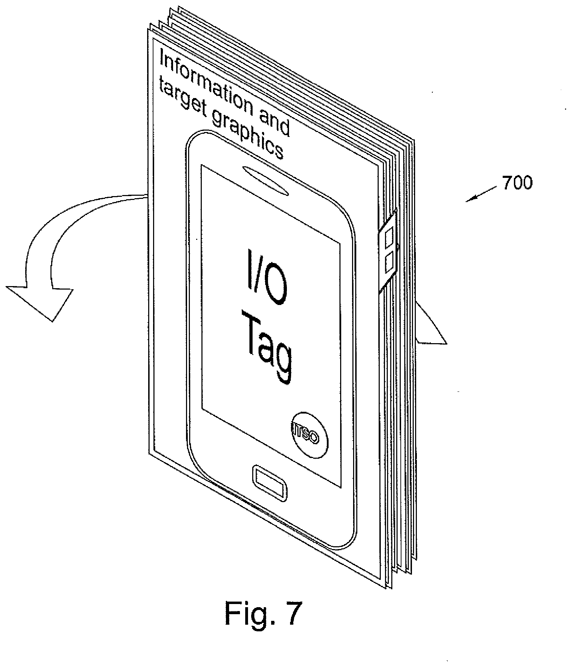

Figure 7 shows a dual machine readable tag 700. The tag 700 is constructed in a similar manner to the machine readable tag 500 shown in Figure 5. However, the dual machine readable tag 700 has an additional smartcard insert, label and faceplate mounted behind the ferrite shield. Therefore, the dual machine readable tag 700 can be read from either the front or the back. The ferrite shield between the two smartcards prevents the smartcard on the opposite side of the dual machine readable tag 700 from being read when a smart phone is presented on a given side of the dual machine readable tag 700. It is envisaged that a dual machine readable tag 700 such as that shown in Figure 7 could be mounted so that it can be reversed. If mounted in this way, the tag could be presented with a first smartcard at the front for an outward journey and then reversed so that the second smartcard on the opposite side would be at the front for the return journey. The dual machine readable tag 700 could include a single coupling coil, two coupling coils, or no coupling coils with just two smartcards separated with a ferrite shield within the polymer layers and faceplates.

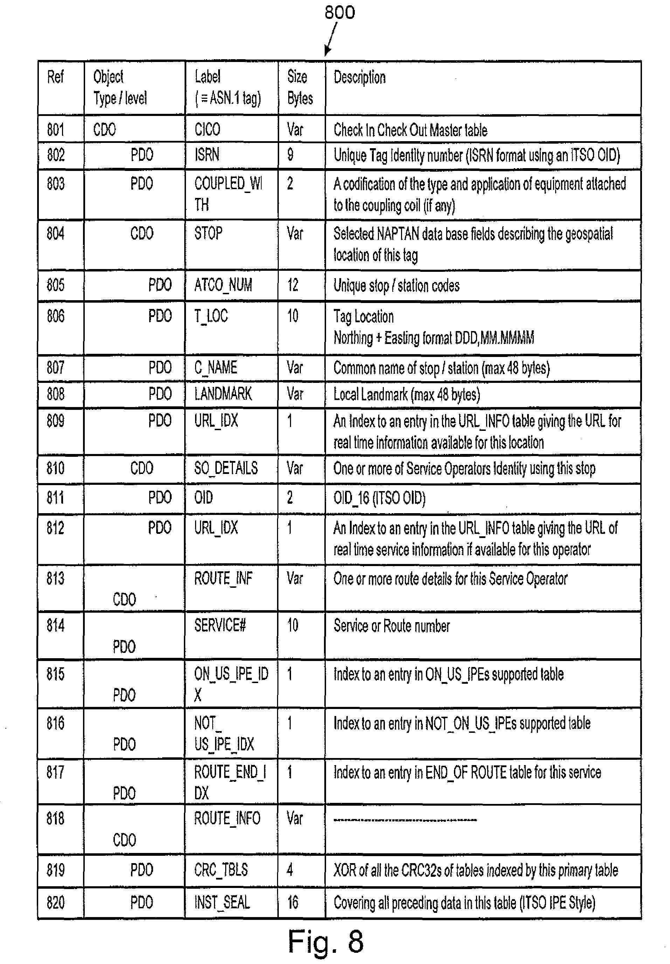

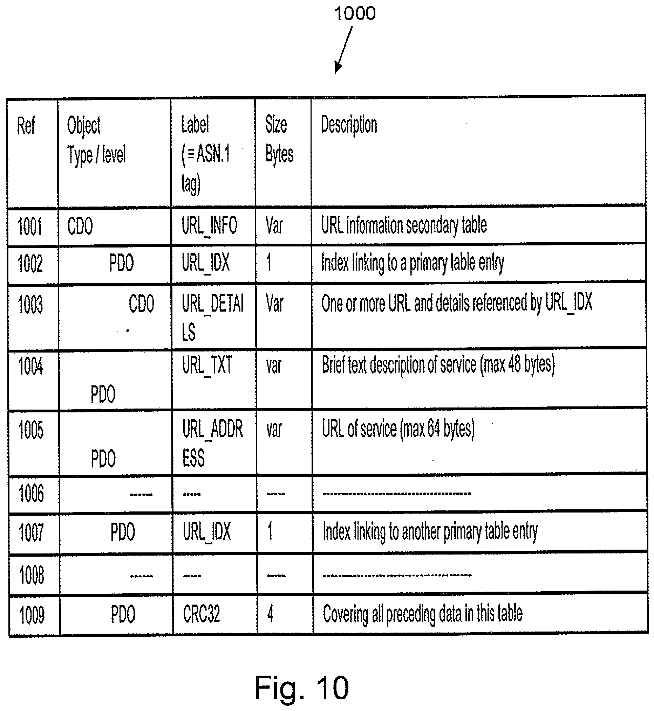

Figure 8 is a table 800 showing the data stored on the smartcard in a check-in/check-out (CICO) tag. The Check-In/Check-Out domain tags are sited at fixed locations and supply PVT applications running on smart phones with read only information. The Check In/Check Out domain tags may be periodically updated, for example when alterations are made to time tables or routes. The table 800 has a Check In Check Out master table 801 which is a consolidated data object (CDO). The Check In Check Out master table 801 comprises a collection of primitive data objects (PDOs) and other CDOs. The master table 801 includes references to secondary tables. The secondary tables are described below with reference to Figures 10-12.

A reference number ISRN 802 uniquely identifies the tag using an Integrated Transport Smartcard Organisation (ITSO) Operator identification number (OID). A primitive data object 803 identifies the type of equipment attached to the tag via the coupling coil.

The table 800 includes a consolidated data object 804 which identifies the location of the tag. The consolidated data object 804 may include an Association of Train Operating Companies (ATOC) identifier 805 of the bus stop or station where the tag is located. The CDO 804 includes a grid reference indication 806 of the tag location. The CDO 804 further includes an indication of the common name of the stop or station 807 and an indication of a local landmark 808.

The table 800 includes a data object 809 which is an index to a Uniform Resource Locator (URL) indicating the location of real time information available for the bus stop.

The table 800 also includes a consolidated data object 810 indicating the service operators that use the stop. The consolidated data object 810 includes a unique identifier 811 of the service operator. The consolidated data object 810 also includes an index 812 to a URL entry indicating a URL where real time service information about the particular service operator is available. The service operator consolidated data object 810 includes a number of route data objects 813 which give details of routes, for example bus routes from the bus stop. The route data object 813 includes an indication of a route or service number 814. The route data object 813 includes an index to at least one secondary table - this may be an ON_US_IPE table 814 if the services on the route are offered by the same service provider as manages the bus stop or station, or a NOT_ON_US IPE table 815 if the services are offered by a different service provider. The data object 813 also includes an index to a data object 817 containing data on the final stop on that route.

The table has a data object 819 including information for a cyclic redundancy check and also includes a seal 820. The seal 820 provides a means of verifying that the data within the table 800 is authentic.

It will be apparent to those of skill in the art that some of the entries in table 800 may be omitted. Data objects may be omitted or coded as zero length when they are not required or supported.

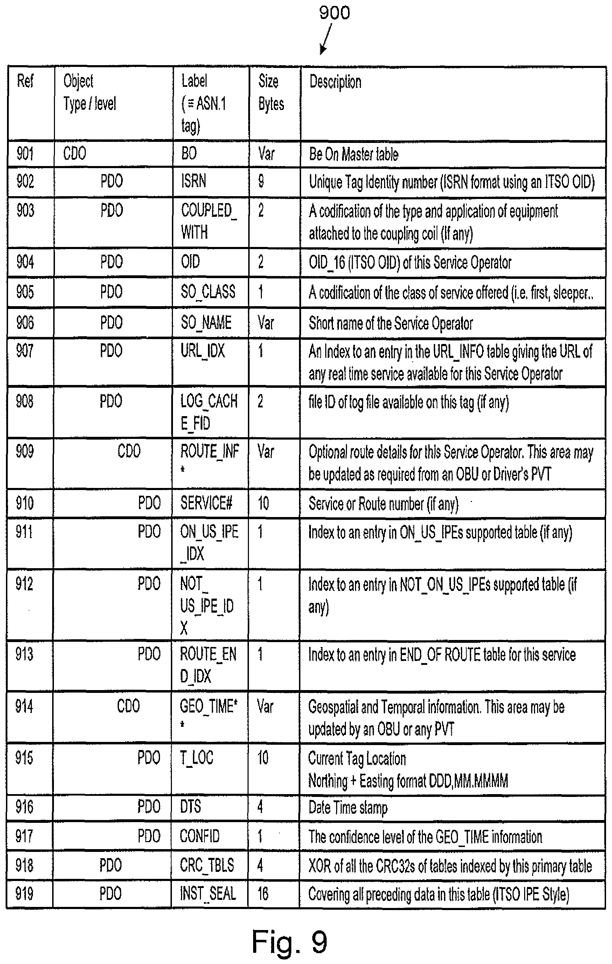

Figure 9 shows a table 900 showing data stored on a Be-On (BO) tag. A Be-On tag is located on a bus or train. When boarding a bus or train a passenger presents their smart phone to the Be-On tag and if the tag and smart phone authenticate, the status of the PVT application on the smart phone is changed to 'Be-On' to indicate that the passenger is on the bus or train. The Be-On tags are sited on vehicles and supply PVT applications running on smart phones with mainly read only information. Where additional system resilience is needed, the Be-On tags may be written to by PVTs or On-Board Units attached to the coupling coil of the tag.

The primary Be On table indexes to entries in secondary tables as required. However in this case the details held in the secondary tables only relate to the single Service Operator involved. This primary table also includes a scratch pad area that may be updated by customers PVT, Driver PVTs or OBUs as appropriate to the fare structure and environment within which the tags are sited. It is also envisaged that for additional reconciliation / auditing purposes there may be a small cyclic log file of < 4Kbytes provided within a Be On tag if communication with an OBU is not supported.

The table 900 comprises a Be-On Master table consolidated data object 901. The Be-On Master table CDO 901 includes an identifier 902 which uniquely identifies the tag. The Be-On Master table CDO 901 also includes a data object 903 which has a codification of the type of equipment attached to the tag by a coupling coil. The Be-On Master table CDO 901 includes data objects which indicate the identification of the service operator 904, a codification of the class of service offered 905, and an indication of the short name 906 of the service operator.

The Be-On Master table CDO 901 includes an index 907 to an entry in a URL table indicating a URL where real time information is available for the service operator.

The Be-On Master table CDO 901 includes a log cache file identifier data object 908 which indicates a file identifier of a log file for the Be-On tag.

The Be-On Master table CDO 901 includes a route information CDO 909 which indicates route details for the service operator. The route information CDO 909 may be updated by an On-Board unit (OBU) or a driver's personal validation terminal (PVT). The route information CDO 909 includes an indication of the route or service number 910, and may also include an index to at least one secondary table - this may be an ON_US_IPE table 911 if the services on the route are offered by the same service provider as manages the bus stop or station, or a NOT_ON_US IPE table 912 if the services are offered by a different service provider. The route information CDO 909 also includes a route end index data object 913.

The Be-On Master table CDO 901 includes a geospatial and temporal information CDO 914. The geospatial and temporal information CDO 914 includes a current location PDO 915 and a date and time stamp PDO 916. The information in the a current location PDO 915 and a date and time stamp PDO 916 is updated by the PVT application running on a passenger's smart phone when the smart phone exchanges data with the Be-On tag. The information in the a current location PDO 915 and a date and time stamp PDO 916 may also be updated by an On-Board Unit on the bus or train. The geospatial and temporal information CDO 914 includes a confidence level PDO 917 which includes an indication of the confidence level of the geospatial information.

The Be-On Master table CDO 901 includes Cyclic Redundancy Check (CRC) PDO 918 which includes information for a performing a cyclic redundancy check and a seal PDO 919.

Figure 10 shows a table 1000 showing the data stored on a secondary URL information table. The table 1000 has a URL information secondary table CDO 1001. The URL information secondary table CDO 1001 has an index PDO 1002 which is an index with a link to a primary table entry, for example the index 907 on Be-On Master table CDO 901 described above in relation to Figure 9.

Following the index PDO 1002 there is a URL details CDO 1003. The URL details CDO 1003 includes a URL text PDO 1004 which is a brief text description of the service and a URL address PDO 1005. The URL information secondary table CDO 1001 may include a further index PDO 1007 which is followed by a further URL text PDO and URL address PDO. The URL information secondary table CDO 1001 has a CRC PDO 1009.

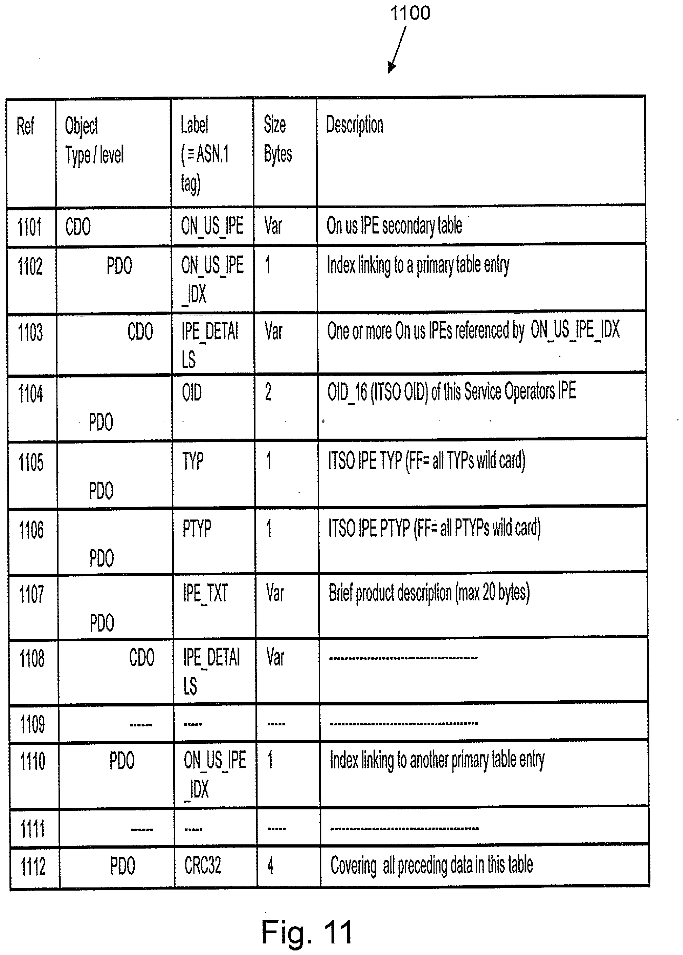

Figure 11 shows a table 1100 showing the data stored in an On Us IPE secondary table. The On Us table CDO 1101 includes an index PDO 1102 which links to a primary data table entry, for example the index 911 shown in Figure 9. The On Us CDO 1101 includes a Product Entity (IPE) CDO 1103 which stores details of a product or service. The Product Entity CDO 1103 includes an operator identity (OID) PDO 1104 which identifiers the service operator, a type (TYP) PDO 1105, and a subtype (PTYP) PDO 1106. The Product Entity CDO 1103 also includes a text description PDO 1107. The On Us table CDO 1101 may include additional entries as describe above.

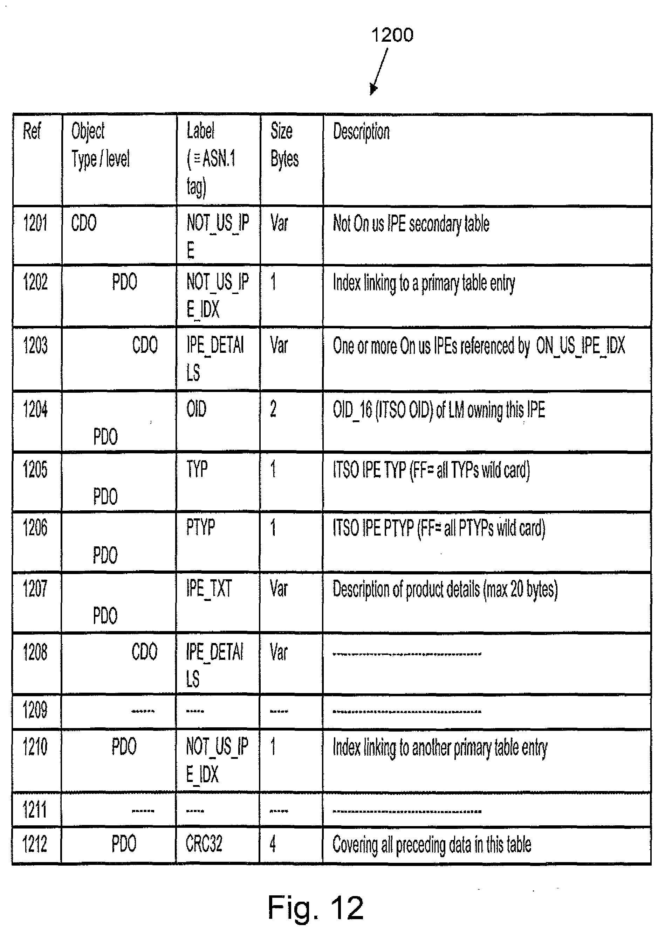

Figure 12 shows a table showing the data stored in a Not On Us secondary IPE table 1200. The No On Us CDO 1201 has a similar structure to the On Us CDO described above in relation to Figure 11. One difference from the On Us CDO is that the Not On Us CDO 1201 includes a PDO 1204 which indicates the identity of the Licensed Member (LM) or service operator that operates the service.

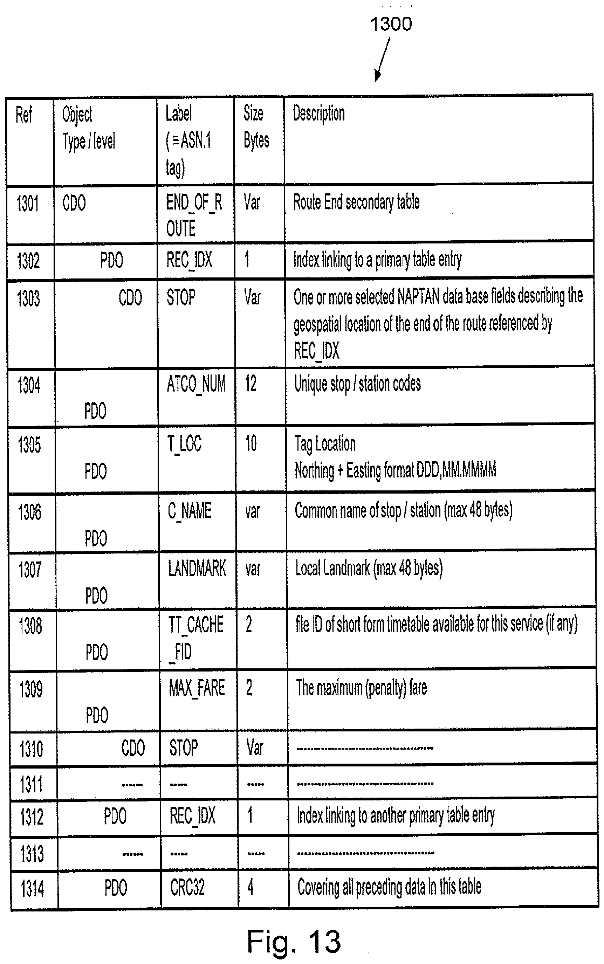

Figure 13 shows a table of the data stored in an end of route secondary table 1300. The secondary table is a CDO 1301. The end of route secondary table CDO 1301 includes an index PDO 1302 which links to a primary data table entry. The end of route secondary table CDO 1301 includes a stop CDO 1303 which identifies the geospatial location of the end of the route. The stop CDO 1303 includes a unique stop identifier PDO 1304 and an location PDO 1305. The stop CDO 1303 also includes PDOs which identify the common name of the stop 1306, and a local landmark 1307. The stop CDO 1303 may also include a cache file identifier PDO 1308 which identifies the location of a timetable, and a maximum fare indicator PDO 1309 which identifies the maximum fare or penalty fare.

It is possible that where tag space permits that one or more copies of complete or partial (i.e. first, last service times plus frequency) timetable(s) relating to services using a stop may be stored in the tag. For example rural services where services are infrequent those places not covered by reliable mobile internet services. In this case the cache Data Object 1308 would point to the File ID of a transparent file holding the relevant timetable information.

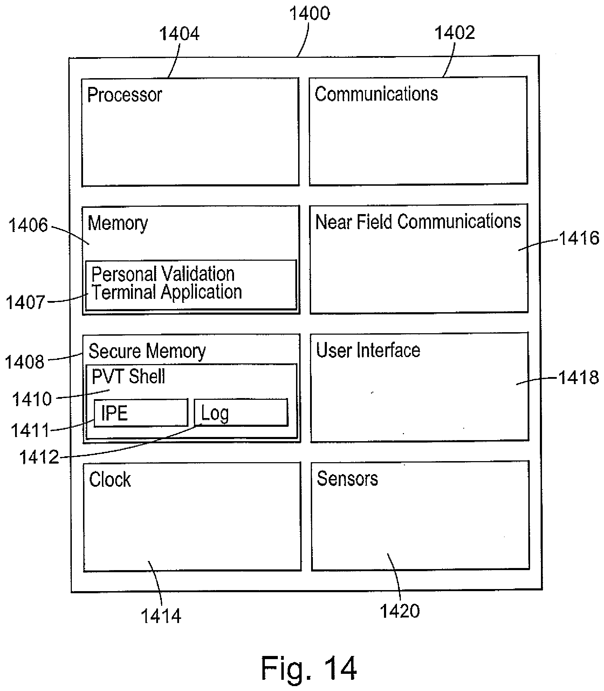

Figure 14 shows a portable electronic device 1400 such as a smart phone, which functions as a personal validation terminal (PVT). The portable electronic device 1400 has a communications module 1402 which allows the portable electronic device 1400 to transmit and receive data, for example using SMS messages or over the internet. The portable electronic device 1400 has a processor 1404 which can execute computer readable instructions. The portable electronic device 1400 has a memory 1406 which stores a personal validation terminal (PVT) application 1407. The PVT application 1407 can be executed by the processor 1404. The portable electronic device 1400 has a secure memory 1408. An area of this memory is allocated as a PVT shell 1410 for use by the PVT application. The PVT shell 1410 stores an Integrated Product Entity (IPE) 1411 which is an indication of a type of ticket. The PVT shell 1410 may store more than one IPE. Examples of possible IPEs stored are: a concessionary ticket which indicates that the holder is entitled to travel on certain services at a reduced cost or free of charge; a season ticket which indicates that the holder is entitled to travel on certain services without further payment. The PVT shell 1410 also stores a log 1412 which is written by the PCT application 1407 and indicates events on a journey that the holder of the portable electronic device 1400 has taken.

The portable electronic device 1400 has a clock 1414 which generates time stamps indicating a date and time at which an event took place. The portable electronic device 1400 has a near field communications module 1416 which allow the device to transmit information to and receive information from smartcards. The portable electronic device 1400 has a user interface 1418 which may be implemented as a touch screen to allow a user to view information and input commands. The portable electronic device 1400 may include a sensor module 1420 including an accelerometer and microphone which allow the device to determine characteristics of its surroundings.

The secure memory 1408 may be implemented in the phone SIM card of a smart phone. In addition to functioning as a portable validation terminal, the PVT application 1407 may allow the portable electronic device 1400 to function as a standard customer media. For example, the portable electronic device 1400 may be configured to act as a standard smartcard using the near field communications module 1416.

The IPE may be implemented using the Java programming language. For example, the IPE maybe be a CMD2 running one or more applets on a Java interpreter.

It is also possible that the loading of CM/Shell and IPEs as an applet in the Java emulation of CMD2 may already have been taken care of by another party. That is the storage location for storing indications of for example season tickets may be predefined and loaded onto the portable electronic device. In that case (read only) access to the Shell data is assumed to be available internally in the portable electronic device to the PVT application.

It s envisaged that the PVT application will mainly reside in the processor and communicate with the secure memory 1406 and near filed communication module 1416 as required.

When running, the PVT application in conjunction with the information stored in the PVT Shell 1410 is be able to:
- Authenticate the I/O tags primary table SEAL
- Read and log any information, from the I/O Tags primary and any secondary tables present, without mutual authentication
- Write data where necessary to the Be On Tag scratch pad area after mutual authentication
- Set the I/O tag into the halt state and send data via the coupling coil to any equipment attached to the I/O tag sandwich.
   a) The PVT may then support one or more applications, determined by the presence and value of the COUPLED_WITH Data Object, that interact with the attached equipment.
   b) NB: Some of the above applications may require mutual authentication between the PVT and the attached equipment
- Manage the process of key changing in conjunction with the information stored in the secure memory as required
- Access any Geospatial data available to the phone
- Access the phones Date and Time indication
- Access accelerometer and microphone inputs.
- For each change of state of the PVT from Out, In or On a usage event message (sequenced and sealed in conjunction with the SIM) will be recorded by the PVT
- Send usage event messages to the VTM at the earliest opportunity after the event occurs, or as determined by the VTM
- Act on receipt of GSM (SMS or GPRS) messages that are targeted at the IPE that involve
   a) A forced state change
   b) A forced send / re-send of one or more messages to the VTM
   c) Purging one or more messages from the message log
   d) A Hot listing of the PVT / CM application
   e) An Update to the PVT application

According to the invention it is envisaged that the outputs from the sensors 1420 are used to determine acceleration / deceleration information of the portable electronic device 1400. This information is coupled with inputs from the phone's microphone. From this the vibration and audio signature of a vehicle (i.e. bus, train, ferry ...etc) is characterised. The PVT application 1407 is then be able to differentiate pedestrian and vehicular motion and even determine specific vehicles and journeys in order to reset false check in and / or confirm missed Be On events.

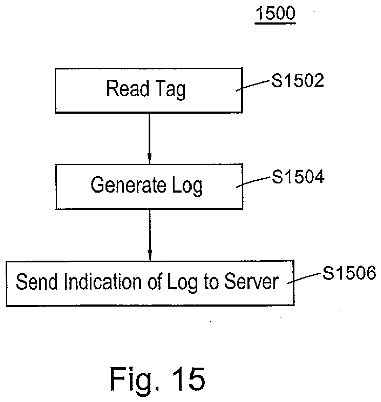

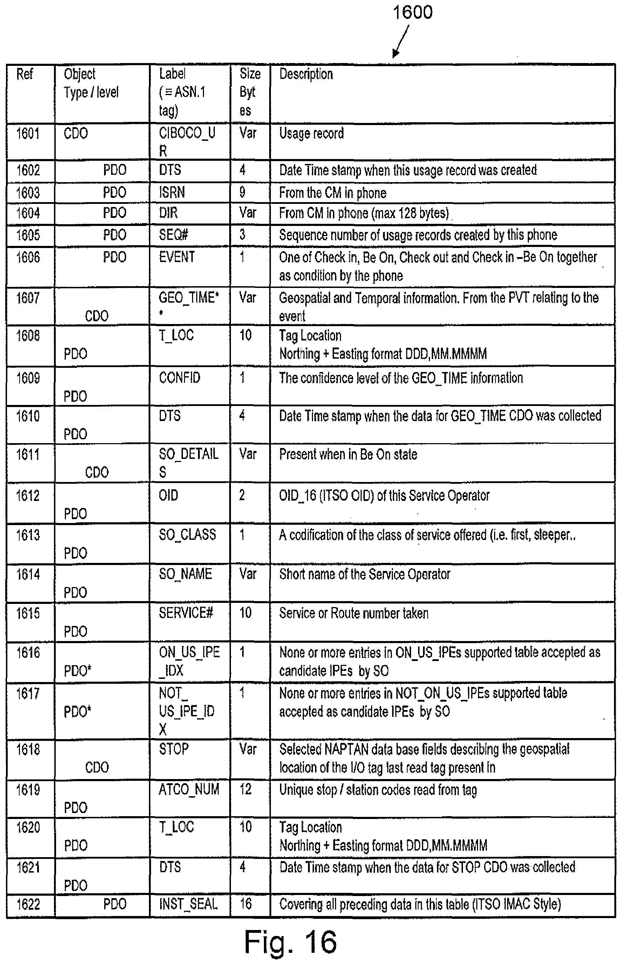

Figure 15 is a flowchart illustrating a method performed by the Personal Validation Terminal Application 1407. In Step S1502, the Personal Validation Terminal Application 1407 causes the near field communications module 1416 to read a tag. The step of reading the tag may include the portable electronic device 1400 using the near field communications module to authenticate the tag using data stored in the secure memory 1408. Following the step S1502 of reading the tag, in step S1504, the Personal Validation Terminal Application 1407 generates an entry in the log 1412 stored in the secure memory 1408 of the portable electronic device 1400. Depending on the type of journey, further tags may be read and further log entries may be generated. In step S1506, an indication of the log is sent to a server. In step S1506, the portable electronic device 1400 uses the communications module 1402 to send an indication of the journey log 1412 to the server. The server may be implemented as shown in Figure 4. In response to receiving the indication of the journey log, the server generates a record of the journey. The server may also perform a transaction, for example to generate a bill for the journey. Figure 16 shows a table 1600 illustrating a consolidated data object (CDO) 1601 of a usage record stored in the log 1412. The PVT application stores usage data messages in a file capable of storing at least the last 128 journey legs. This file is stores at least the data shown in the consolidated data object (CDO) 1601 for every event recorded on a journey. It is envisaged that there will typically be two or three events stored per journey leg. The PVT application is used to supplement information read from I/O tags to give the system significant resilience to accidental or deliberate misuse. It is assumed that the Virtual Ticket Machine or server will hold copies of all the tables defined for the I/O tags in order to interpret the short forms included in the event records.

The usage record CDO 1601 includes a date time stamp PDO 1602 which indicates when the usage record was created. The usage record CDO 1601 includes a reference number PDO 1603 which uniquely identifies the PVT Shell 1408 in which the log is stored. The usage record CDO 1601 includes a directory entry PDO 1604. The directory entry PDO 1604 acts as a label for the IPE or an IPE, for example one of the tickets or products stored in the secure memory of the portable electronic device. The usage record CDO 1601 includes a sequence number PDO 1605 that identifies the sequence number of the record created by the portable electronic device.

The usage record CDO 1601 includes an event PDO 1606 which indicates an event from Check in, Be On, Check out or Check in and Be On together, as the current status of the portable electronic device when the event was recorded.

The usage record CDO 1601 includes a geospatial and temporal information CDO 1607 that indicates information determined by the PVT application corresponding to an event. The geospatial and temporal information CDO 1607 includes a location PDO 1608, a confidence level PDO 1609 and a date time stamp PDO 1610.

When the event associated with the Be On state, that is, for example, when the passenger is on a bus or train, the usage record CDO 1601 includes a service operator details CDO 1611. The service operator details CDO 1611 includes an operator identification PDO 1612 that identifies the service operator, for example, the bus or train company. The service operator details CDO 1611 includes a service class PDO 1713, a service operator name PDO 1614 that indicates the name of the service operator, and a service PDO 1615 that indicates the route of the service, this may be for example a number indicating a particular bus route. The service operator details CDO 1611 includes one of an On Us IPE index PDO 1616 or a Not On Us IPE index PDO. These indicate IPEs, for example tickets or concessionary passes that are accepted by the service operator.

The usage record CDO 1601 includes a stop CDO 1618 associated with the event PDO 1606. The stop CDO 1618 indicates a location, for example a bus stop. The stop CDO 1618 includes a stop identifier PDO 1619 which uniquely identifies the stop, a location PDO 1620 that indicates the location of the stop and a date time stamp PDO 1621 that indicates when the data for the stop CDO 1618 was collected.

The usage record CDO 1601 has a seal PDO 1622 that can be used to authenticate all the data in the table 1600.

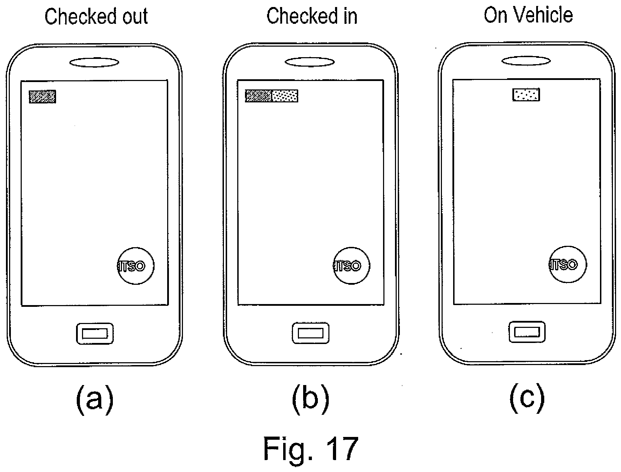

Figures 17a - 17c show how the status of the PVT application is displayed to the user. The user interface shows the status of the PVT to the user in the form of a traffic light display. When the PVT application is activated on a user's smart phone a simple traffic light display system on the phone will indicate the status of any leg of a journey shown in Figures 17a-17c.

A user may be able to configure the display configuration and display options will be available via the phones menu system. It is envisaged that users will be able to select their own preferences from a range suitable for different accessibility and travel needs.

Figure 17a shows a checked out state. The display 1700 displays a red indicator 1702. Figure 17b shows a checked in state. In this state the display 1710 displays a red and amber indicator 1712. Figure 17c shows an on vehicle state. In this state the display 1720 displays a green indicator 1722.

The PVT application controls the display so that:
1) At check in or out it reads the Check I/O tag
   a) Where status = Red or Red + Amber
      i) If there are no services read from the I/O tag that accept any of the products (IPEs) held by the PVT then check in will be inhibited the status will be set to Red, the reason displayed and the PVT logged as "OUT". If trying to gain entry via a barrier an alarm message will be delivered via the coupling coil in the tag and the barrier will remain closed.
      ii) If there are any services that accept any of the products held by the PVT then check in will be enabled and the candidate products displayed and logged. If trying to gain entry via a barrier an OK message will be delivered via the coupling coil in the tag and the barrier will be opened. In this case the I/O Tag determines whether the status will be set to Green or remain at Red + Amber and the PVT logged as "ON" or "IN" respectively.
   b) Where status = Green
      i) Where the location read from a Check in Check out tag is different from that last recorded by the PVT then check out is deemed to have taken place and the status will be set to Red, the reason displayed and the PVT logged as "OUT".
      ii) After a reasonable period of time has elapsed (perhaps over night or determined by the last check in tag) or where the PVT consistently registers the customers "home" location then check out is deemed to have taken place and the status will be set to Red, the reason displayed and the PVT logged as "OUT".

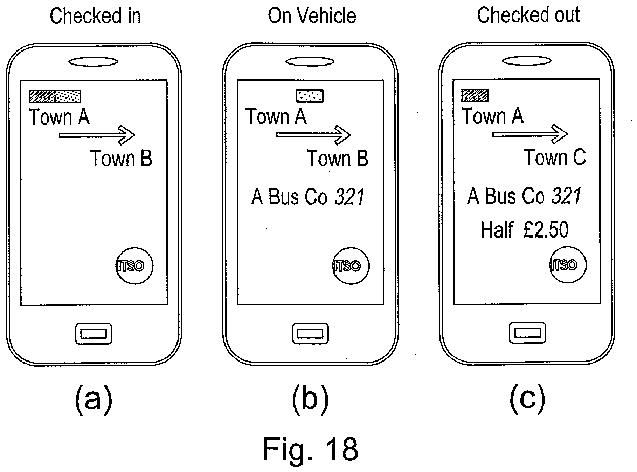

Figures 18a - 18c show an example of the information displayed on the display during a journey.

The display after a user checks in is shown in Figure 18a. The display displays the current location 'Town A' and the end of route destination 'Town B' for services from the current destination. The status indicator in Figure 18a is red and amber to indicate that the status is 'checked in'.

The display when the user is on board a service is shown in Figure 18b. The display shows the origin 'Town A' and the end of route destination 'Town B' for the service. The display also displays an indication of the service provider 'A Bus Co.' and the service number '321'. The status indicator is green in figure 18b to indicate that the user is 'on board'. The change of status from 'checked in' to 'on board' is triggered by the user presenting their smart phone to the on board tag in the service.

Figure 18c shows the information displayed when the user checks out. The status indicator is red to indicate that the status is checked out. In the example shown in Figure 18c, the user has disembarked at Town C and presented their smart phone to a check out tag at a bus stop. The display displays the journey which the user has taken (Town A to Town C), an indication of the service operator and service number (A Bus Co. 321) and an indication of the fare (£2.50). In this case, the display also shows the word 'Half' indicating that the user's smart phone stored an IPE indicating that they are entitled to concessionary fares.

Following the act of checking out as illustrated by Figure 18c, the smart phone will send an indication of the journey log to the Virtual Ticket Machine server. The Virtual ticket Machine server generates a record of the journey. If the holder of the smart phone was entitled to a subsidised fare, the virtual ticket machine may generate an electronic transaction so that the party responsible for subsidising the fare makes a payment to the service provider. The Virtual ticket machine may also generate a transaction so that the passenger makes a payment for a portion of the fare. This may be implemented by deducing the fare, in this case £2.50 from a balance in the passenger's account.

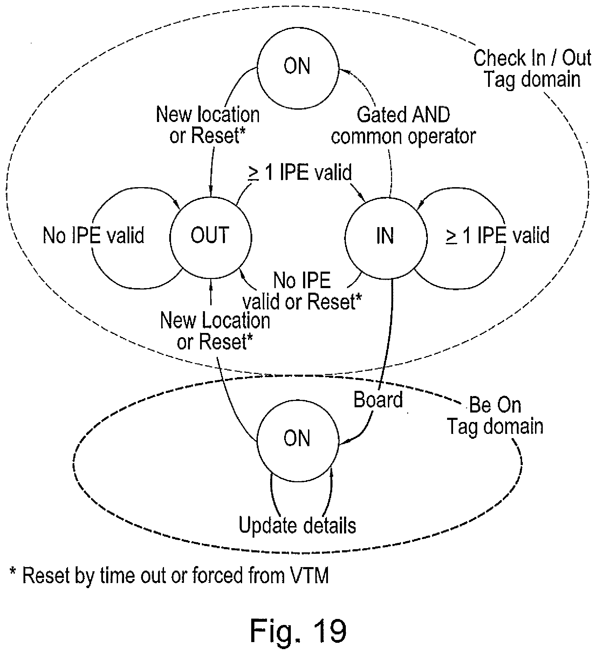

Figure 19 illustrates possible changes in state corresponding to the validity of IPEs stored on a user's smart phone or portable electronic device. The PVT application may use the logic shown in figure 19 to determine the status of the passenger. For example, if passenger remains in the same location for a long period of time then the PVT application determines that the passenger is not located on a transport vehicle.

Figure 18c shows the information displayed when the user checks out. The status indicator is red to indicate that the status is checked out. In the example shown in Figure 18c, the user has disembarked at Town C and presented their smart phone to a check out tag at a bus stop. The display displays the journey which the user has taken (Town A to Town C), an indication of the service operator and service number (A Bus Co. 321) and an indication of the fare (£2.50). In this case, the display also shows the word 'Half' indicating that the user's smart phone stored an IPE indicating that they are entitled to concessionary fares.

Following the act of checking out as illustrated by Figure 18c, the smart phone will send an indication of the journey log to the Virtual Ticket Machine server. The Virtual ticket Machine server generates a record of the journey. If the holder of the smart phone was entitled to a subsidised fare, the virtual ticket machine may generate an electronic transaction so that the party responsible for subsidising the fare makes a payment to the service provider. The Virtual ticket machine may also generate a transaction so that the passenger makes a payment for a portion of the fare. This may be implemented by deducing the fare, in this case E2.50 from a balance in the passenger's account.

Figure 19 illustrates possible changes in state corresponding to the validity of IPEs stored on a user's smart phone or portable electronic device. The PVT application may use the logic shown in figure 19 to determine the status of the passenger. For example, if passenger remains in the same location for a long period of time then the PVT application determines that the passenger is not located on a transport vehicle.

## Claims

1. An electronic ticketing system comprising
a plurality of machine readable tags (102, 106, 108, 232, 242, 252, 262, 272, 282, 500, 700) each associated with at least one service for a journey on a vehicle, the vehicle being a bus (110, 240), train (270) or ferry;
a portable electronic device (120, 220, 300, 402, 1400) configured to execute a personal validation terminal "PVT" application (1407), the portable electronic device comprising a secure memory (306) and being configured to:
read one of the plurality of machine readable tags (102, 106, 108, 232, 242, 252, 262, 272, 282, 500, 700) upon presentation of the portable electronic device (120, 220, 300, 402, 1400) to the one of the plurality of machine readable tags (102, 106, 108, 232, 242, 252, 262, 272, 282, 500, 700) during a check-in event and to update the status of the PVT application to "Be-on" following authentication of the tag and the portable electronic device (120, 220, 300, 402, 1400), the Be-on status indicating that a passenger who presented the portable electronic device (120, 220, 300, 402, 1400) is on the vehicle, the authentication being performed by comparing information stored in the secure memory (306) with information stored on the machine readable tag (102, 106, 108, 232, 242, 252, 262, 272, 282, 500, 700), to check if the information stored on the portable electronic device (120, 220, 300, 402, 1400) indicates that the user has a valid ticket for a service associated with the machine readable tag (102, 106, 108, 232, 242, 252, 262, 272, 282, 500, 700);
store information read from the machine readable tag (102, 106, 108, 232, 242, 252, 262, 272, 282, 500, 700) in a log file on the portable electronic device (120, 220, 300, 402, 1400); and
send an indication of the information stored in the log file to a server (130, 400) over a wireless network,
the electronic ticketing system further comprising a server (130, 400) configured to receive, via a wireless network, the log file and generate a record of the service used,
wherein the portable electronic device (120, 220, 300, 402, 1400) further comprises a sensor module (1420) including an accelerometer and microphone, the PVT application being configured to:
access the accelerometer and microphone and characterise the sensed vibration and audio signals to determine the vibration and audio signature of the vehicle to differentiate pedestrian and vehicular motion; and
to reset false check-in events and confirm Be-on status.

2. The electronic ticketing system of claim 1 wherein a tag (102, 106, 108, 232, 242, 252, 262, 272, 282, 500, 700) of the plurality of machine readable tags comprises a smartcard.

3. A method for a portable electronic device (120, 220, 300, 402, 1400), the method comprising
reading a machine readable tag upon presentation of the portable electronic device (120, 220, 300, 402, 1400) to a machine readable tag (102, 106, 108, 232, 242, 252, 262, 272, 282, 500, 700) during a check-in event, the machine readable tag being (102, 106, 108, 232, 242, 252, 262, 272, 282, 500, 700) associated with at least one service for a journey on a vehicle, the vehicle being a bus, train or ferry;
authenticating the machine readable tag (102, 106, 108, 232, 242, 252, 262, 272, 282, 500, 700), wherein authenticating the machine readable tag (102, 106, 108, 232, 242, 252, 262, 272, 282, 500, 700) comprises comparing information stored on the portable electronic device (120, 220, 300, 402, 1400) with information stored on the machine readable tag (102, 106, 108, 232, 242, 252, 262, 272, 282, 500, 700) to check if the information stored on the portable electronic device (120, 220, 300, 402, 1400) indicates that the user has a valid ticket for a service associated with the machine readable tag (102, 106, 108, 232, 242, 252, 262, 272, 282, 500, 700);
updating the status of a personal validation terminal "PVT" application which is executed by the portable electronic device to "Be-on" following the authentication of the machine readable tag (102, 106, 108, 232, 242, 252, 262, 272, 282, 500, 700), the Be-on status indicating that a passenger who presented the portable electronic device (120, 220, 300, 402, 1400) is on the vehicle; storing information read from the machine readable tag (102, 106, 108, 232, 242, 252, 262, 272, 282, 500, 700) in a log file on the portable electronic device (120, 220, 300, 402, 1400); and
sending an indication of the information stored in the log file to a server (130, 400) over a wireless network,
wherein the portable electronic device (120, 220, 300, 402, 1400) further comprises a sensor module (1420) including an accelerometer and microphone, the PVT application:
accessing the accelerometer and microphone and characterise the sensed vibration and audio signals to determine the vibration and audio signature of the vehicle to differentiate pedestrian and vehicular motion; and
resetting false check-in events and confirming Be-on status.

4. The method of claim 3, further comprising adding a time stamp to the log file.

5. A computer program product comprising processor executable instructions which when executed on a processor cause the processor to carry out a method according to either of claims 3 or 4.

6. A portable electronic device (120, 220, 300, 402, 1400) comprising
a near field communication coil configured to read information from a machine readable tag, upon presentation of the portable electronic device to the machine readable tag (102, 106, 108, 232, 242, 252, 262, 272, 282, 500, 700) during a check-in event, the machine readable tag (102, 106, 108, 232, 242, 252, 262, 272, 282, 500, 700) being associated with at least one service for a journey on a vehicle, the vehicle being a bus, train or ferry;
a processor configured to:
authenticate the machine readable tag, wherein authenticating the machine readable tag (102, 106, 108, 232, 242, 252, 262, 272, 282, 500, 700) comprises comparing information stored on the portable electronic device with information stored on the machine readable tag (102, 106, 108, 232, 242, 252, 262, 272, 282, 500, 700) to check if the information stored on the portable electronic device (120, 220, 300, 402, 1400) indicates that the user has a valid ticket for a service associated with the machine readable tag (102, 106, 108, 232, 242, 252, 262, 272, 282, 500, 700);
update the status of a personal validation terminal "PVT" application which is executed by the portable electronic device to "Be-on" following the authentication of the machine readable tag (102, 106, 108, 232, 242, 252, 262, 272, 282, 500, 700), the Be-on status indicating that a passenger who presented the portable electronic device (120, 220, 300, 402, 1400) is on the vehicle;
generate a log file containing the information read from the machine readable tag (102, 106, 108, 232, 242, 252, 262, 272, 282, 500, 700); and
store the log file in a memory on the portable electronic device,
the portable electronic device comprising a wireless antenna configured to send an indication of the log file to a server via a wireless network,
wherein the portable electronic device (120, 220, 300, 402, 1400) further comprises a sensor module (1420) including an accelerometer and microphone, the PVT application being configured to:
access the accelerometer and microphone and characterise the sensed vibration and audio signals to determine the vibration and audio signature of the vehicle to differentiate pedestrian and vehicular motion; and
to reset false check-in events and confirm Be-on status.

## Patentansprüche

1. Elektronisches Ticketing-System, umfassend
eine Vielzahl von maschinenlesbaren Tags (102, 106, 108, 232, 242, 252, 262, 272, 282, 500, 700), die jeweils mindestens einem Dienst für eine Fahrt in einem Fahrzeug zugeordnet sind, wobei das Fahrzeug ein Bus (110, 240), ein Zug (270) oder eine Fähre ist,
eine tragbare elektronische Vorrichtung (120, 220, 300, 402, 1400), die zur Ausführung einer persönlichen Validierungsterminal-"PVT"-Anwendung (1407) konfiguriert ist, wobei die tragbare elektronische Vorrichtung einen sicheren Speicher (306) umfasst und konfiguriert ist, zum:
Lesen einer der Vielzahl von maschinenlesbaren Tags (102, 106, 108, 232, 242, 252, 262, 272, 282, 500, 700), wenn die tragbare elektronische Vorrichtung (120, 220, 300, 402, 1400) dem einen aus der Vielzahl von maschinenlesbaren Tags (102, 106, 108, 232, 242, 252, 262, 272, 282, 500, 700) während eines Check-in-Ereignisses präsentiert wird und Aktualisieren des Status der PVT-Anwendung nach der Authentifizierung des Tags und der tragbaren elektronischen Vorrichtung (120, 220, 300, 402, 1400) auf "Be-on", wobei der Be-on-Status anzeigt, dass ein Passagier, der die tragbare elektronische Vorrichtung (120, 220, 300, 402, 1400) vorgelegt hat, sich an Bord des Fahrzeugs befindet, wobei die Authentifizierung durch den Vergleich von im sicheren Speicher (306) gespeicherten Informationen mit auf dem maschinenlesbaren Tag (102, 106, 108, 232, 242, 252, 262, 272, 282, 500, 700) gespeicherten Informationen durchgeführt wird, um zu prüfen, ob die auf der tragbaren elektronischen Vorrichtung (120, 220,300, 402, 1400) gespeicherten Informationen darauf hinweisen, dass der Benutzer ein gültiges Ticket für eine Dienstleistung besitzt, die dem maschinenlesbaren Tag (102, 106, 108, 232, 242, 252, 262, 272, 282, 500, 700) zugeordnet ist,
Speichern von Informationen, die von dem maschinenlesbaren Tag (102, 106, 108, 232, 242, 252, 262, 272, 282, 500, 700) abgelesen wurden, in einer Protokolldatei auf der tragbaren elektronischen Vorrichtung (120, 220, 300, 402, 1400); und
Senden eines Hinweises auf die in der Protokolldatei gespeicherten Informationen an einen Server (130, 400) über ein drahtloses Netzwerk,
wobei das elektronische Ticketing-System ferner einen Server (130, 400) umfasst, der so konfiguriert ist, dass er über ein drahtloses Netzwerk die Protokolldatei empfängt und eine Aufzeichnung des genutzten Dienstes erzeugt,
wobei die tragbare elektronische Vorrichtung (120, 220, 300, 402, 1400) ferner ein Sensormodul (1420), das einen Beschleunigungsmesser und ein Mikrofon einschließt, umfasst und die PVT-Anwendung konfiguriert ist, zum:
Zugreifen auf den Beschleunigungsmesser und das Mikrofon und Charakterisieren der erfassten Vibrations- und Audiosignale, um die Vibrations- und Audiosignatur des Fahrzeugs zu bestimmen, um zwischen Fußgänger- und Fahrzeugbewegungen zu unterscheiden; und
Zurücksetzen von falschen Check-in-Ereignissen und Bestätigen des Be-on-Status.

2. Elektronisches Ticketing-System nach Anspruch 1, wobei ein Tag (102, 106, 108, 232, 242, 252, 262, 272, 282, 500, 700) der Vielzahl von maschinenlesbaren Tags eine Chipkarte umfasst.

3. Verfahren für eine tragbare elektronische Vorrichtung (120, 220, 300, 402, 1400), wobei das Verfahren Folgendes umfasst
Lesen eines maschinenlesbaren Tags bei der Präsentation der tragbaren elektronischen Vorrichtung (120, 220, 300, 402, 1400) an ein maschinenlesbares Tag (102, 106, 108, 232, 242, 252, 262, 272, 282, 500, 700) während eines Check-in-Ereignisses, wobei das maschinenlesbare Tag (102, 106, 108, 232, 242, 252, 262, 272, 282, 500, 700) mindestens einem Dienst für eine Fahrt an Bord eines Fahrzeugs zugeordnet sind, wobei das Fahrzeug ein Bus, ein Zug oder eine Fähre ist;
Authentifizieren des maschinenlesbaren Tags (102, 106, 108, 232, 242, 252, 262, 272, 282, 500, 700), wobei das Authentifizieren des maschinenlesbaren Tags (102, 106, 108, 232, 242, 252, 262, 272, 282, 500, 700) den Vergleich von auf der tragbaren elektronischen Vorrichtung (120, 220, 300, 402, 1400) gespeicherten Informationen mit auf dem maschinenlesbaren Tag (102, 106, 108, 232, 242, 252, 262, 272, 282, 500, 700) gespeicherten Informationen umfasst, um zu prüfen, ob die auf der tragbaren elektronischen Vorrichtung (120, 220, 300, 402, 1400) gespeicherten Informationen anzeigen, dass der Benutzer ein gültiges Ticket für einen mit dem maschinenlesbaren Tag (102, 106, 108, 232, 242, 252, 262, 272, 282, 500, 700) verbundenen Dienst besitzt,
Aktualisieren des Status einer persönlichen Validierungsterminal-"PVT"-Anwendung, die von der tragbaren elektronischen Vorrichtung ausgeführt wird, auf "Be-on", nach der Authentifizierung des maschinenlesbaren Tags (102, 106, 108, 232, 242, 252, 262, 272, 282, 500, 700), wobei der Be-on-Status anzeigt, dass ein Passagier, der die tragbare elektronische Vorrichtung (120, 220, 300, 402, 1400) vorgelegt hat, sich an Bord des Fahrzeugs befindet; Speichern der von dem maschinenlesbaren Tag (102, 106, 108, 232, 242, 252, 262, 272, 282, 500, 700) abgelesenen Informationen in einer Protokolldatei auf der tragbaren elektronischen Vorrichtung (120, 220, 300, 402, 1400); und
Senden eines Hinweises auf die in der Protokolldatei gespeicherten Informationen an einen Server (130, 400) über ein drahtloses Netzwerk,
wobei die tragbare elektronische Vorrichtung (120, 220, 300, 402, 1400) ferner ein Sensormodul (1420), das einen Beschleunigungsmesser und ein Mikrofon einschließt, umfasst, wobei die PVT-Anwendung Folgendes ausführt:
Zugreifen auf den Beschleunigungsmesser und das Mikrofon und Charakterisieren der erfassten Vibrations- und Audiosignale, um die Vibrations- und Audiosignatur des Fahrzeugs zu bestimmen, um Fußgänger- und Fahrzeugbewegungen zu unterscheiden; und
Zurücksetzen falscher Check-In-Ereignisse und Bestätigen des Be-on-Status.

4. Verfahren nach Anspruch 3, ferner umfassend das Hinzufügen eines Zeitstempels zu der Protokolldatei.

5. Computerprogrammprodukt mit prozessorausführbaren Anweisungen, die, wenn sie auf einem Prozessor ausgeführt werden, den Prozessor veranlassen, ein Verfahren nach einem der Ansprüche 3 oder 4 auszuführen.

6. Tragbare elektronische Vorrichtung (120, 220, 300, 402, 1400) umfassend
eine Nahfeldkommunikationsspule, die so konfiguriert ist, dass sie Informationen von einem maschinenlesbaren Tag liest, wenn die tragbare elektronische Vorrichtung dem maschinenlesbaren Tag (102, 106, 108, 232, 242, 252, 262, 272, 282, 500, 700) während eines Check-in-Ereignisses präsentiert wird, wobei das maschinenlesbare Tag (102, 106, 108, 232, 242, 252, 262, 272, 282, 500, 700) mindestens einem Dienst für eine Reise an Bord eines Fahrzeugs zugeordnet ist, wobei das Fahrzeug ein Bus, ein Zug oder eine Fähre ist;
einen Prozessor, der konfiguriert ist, zum:
Authentifizieren des maschinenlesbaren Tags, wobei das Authentifizieren des maschinenlesbaren Tags (102, 106, 108, 232, 242, 252, 262, 272, 282, 500, 700) den Vergleich von auf der tragbaren elektronischen Vorrichtung gespeicherten Informationen mit Informationen, die auf dem maschinenlesbaren Tag (102, 106, 108, 232, 242, 252, 262, 272, 282, 500, 700) gespeichert sind, um zu prüfen, ob die auf der tragbaren elektronischen Vorrichtung (120, 220, 300, 402, 1400) gespeicherten Informationen darauf hinweisen, dass der Benutzer ein gültiges Ticket für einen Dienst besitzt, der dem maschinenlesbaren Tag (102, 106, 108, 232, 242, 252, 262, 272, 282, 500, 700) zugeordnet ist,
Aktualisieren des Status einer persönlichen Validierungsterminal-"PVT"-Anwendung, die von der tragbaren elektronischen Vorrichtung ausgeführt wird, auf "Be-On", nach der Authentifizierung des maschinenlesbaren Tags (102, 106, 108, 232, 242, 252, 262, 272, 282, 500, 700), wobei der Be-on-Status anzeigt, dass ein Passagier, der die tragbare elektronische Vorrichtung (120, 220, 300, 402, 1400) vorgelegt hat, sich an Bord des Fahrzeugs befindet;
Erzeugen einer Protokolldatei, die die von dem maschinenlesbaren Tag (102, 106, 108, 232, 242, 252, 262, 272, 282, 500, 700) gelesenen Informationen enthält; und
Speichern der Protokolldatei in einem Speicher der tragbaren elektronischen Vorrichtung, wobei die tragbare elektronische Vorrichtung eine drahtlose Antenne umfasst, die so konfiguriert ist, dass sie einen Hinweis auf die Protokolldatei an einen Server über ein drahtloses Netzwerk sendet,
wobei die tragbare elektronische Vorrichtung (120, 220, 300, 402, 1400) ferner ein Sensormodul (1420) umfasst, das einen Beschleunigungsmesser und ein Mikrofon einschließt, wobei die PVT-Anwendung konfiguriert ist, zum:
Zugreifen auf den Beschleunigungsmesser und das Mikrofon und Charakterisieren der erfassten Vibrations- und Audiosignale, um die Vibrations- und Audiosignatur des Fahrzeugs zu bestimmen, um zwischen Fußgänger- und Fahrzeugbewegungen zu unterscheiden; und
Zurückzusetzen von falschen Check-In Ereignissen und Bestätigen des Be-on Status.

## Revendications

1. Système électronique de tickets comprenant
une pluralité d'étiquettes lisibles par machine (102, 106, 108, 232, 242, 252, 262, 272, 282, 500, 700) dont chacune est associée à au moins un service pour un trajet sur un véhicule, le véhicule étant un bus (110, 240), un train (270) ou un ferry ;
un dispositif électronique portable (120, 220, 300, 402, 1400) configuré pour exécuter une application de terminal de validation personnel "PVT" (1407), le dispositif électronique portable comprenant une mémoire sécurisée (306) et étant configuré pour :
lire l'une de la pluralité d'étiquettes lisibles par machine (102, 106, 108, 232, 242, 252, 262, 272, 282, 500, 700) lors de la présentation du dispositif électronique portable (120, 220, 300, 402, 1400) à l'une de la pluralité d'étiquettes lisibles par machine (102, 106, 108, 232, 242, 252, 262, 272, 282, 500, 700) pendant un événement d'enregistrement et pour mettre à jour l'état de l'application PVT à "à bord" suite à l'authentification de l'étiquette et du dispositif électronique portable (120, 220, 300, 402, 1400), l'état à bord indiquant qu'un passager qui a présenté le dispositif électronique portable (120, 220, 300, 402, 1400) est à bord du véhicule, l'authentification étant réalisée en comparant des informations stockées dans la mémoire sécurisée (306) avec des informations stockées sur l'étiquette lisible par machine (102, 106, 108, 232, 242, 252, 262, 272, 282, 500, 700), pour vérifier si les informations stockées sur le dispositif électronique portable (120, 220, 300, 402, 1400) indiquent que l'utilisateur dispose d'un ticket valide pour un service associé à l'étiquette lisible par machine (102, 106, 108, 232, 242, 252, 262, 272, 282, 500, 700) ;
stocker des informations lues à partir de l'étiquette lisible par machine (102, 106, 108, 232, 242, 252, 262, 272, 282, 500, 700) dans un fichier journal sur le dispositif électronique portable (120, 220, 300, 402, 1400) ; et
envoyer une indication des informations stockées dans le fichier journal sur un serveur (130, 400) via un réseau sans fil,
le système électronique de tickets comprenant en outre un serveur (130, 400) configuré pour recevoir, via un réseau sans fil, le fichier journal et pour générer un enregistrement du service utilisé,
dans lequel le dispositif électronique portable (120, 220, 300, 402, 1400) comprend en outre un module de capteur (1420) incluant un accéléromètre et un microphone, l'application PVT étant configurée pour :
accéder à l'accéléromètre et au microphone et caractériser les signaux de vibration et audio captés pour déterminer la signature en termes de vibration et audio du véhicule pour différencier entre des mouvements de piéton et de véhicule ; et
réinitialiser des événements d'enregistrement faux et confirmer l'état à bord.

2. Système électronique de tickets selon la revendication 1, dans lequel une étiquette (102, 106, 108, 232, 242, 252, 262, 272, 282, 500, 700) de la pluralité d'étiquettes lisibles par machine comprend une carte à puce.

3. Procédé pour un dispositif électronique portable (120, 220, 300, 402, 1400), le procédé comprenant
la lecture d'une étiquette lisible par machine lors de la présentation du dispositif électronique portable (120, 220, 300, 402, 1400) à une étiquette lisible par machine (102, 106, 108, 232, 242, 252, 262, 272, 282, 500, 700) pendant un événement d'enregistrement, l'étiquette lisible par machine (102, 106, 108, 232, 242, 252, 262, 272, 282, 500, 700) étant associée à au moins un service pour un trajet à bord d'un véhicule, le véhicule étant un bus, un train ou un ferry ;
l'authentification de l'étiquette lisible par machine (102, 106, 108, 232, 242, 252, 262, 272, 282, 500, 700), dans lequel l'authentification de l'étiquette lisible par machine (102, 106, 108, 232, 242, 252, 262, 272, 282, 500, 700) comprend la comparaison d'informations stockées sur le dispositif électronique portable (120, 220, 300, 402, 1400) avec des informations stockées sur l'étiquette lisible par machine (102, 106, 108, 232, 242, 252, 262, 272, 282, 500, 700) pour vérifier si les informations stockées sur le dispositif électronique portable (120, 220, 300, 402, 1400) indiquent que l'utilisateur dispose d'un ticket valide pour un service associé à l'étiquette lisible par machine (102, 106, 108, 232, 242, 252, 262, 272, 282, 500, 700) ;
la mise à jour de l'état d'une application de terminal de validation personnel "PVT" qui est exécutée par le dispositif électronique portable à "à bord" suite à l'authentification de l'étiquette lisible par machine (102, 106, 108, 232, 242, 252, 262, 272, 282, 500, 700), l'état à bord indiquant qu'un passager qui a présenté le dispositif électronique portable (120, 220, 300, 402, 1400) est à bord du véhicule ; le stockage des informations lues à partir de l'étiquette lisible par machine (102, 106, 108, 232, 242, 252, 262, 272, 282, 500, 700) dans un fichier journal sur le dispositif électronique portable (120, 220, 300, 402, 1400) ; et
l'envoi d'une indication des informations stockées dans le fichier journal sur un serveur (130, 400) via un réseau sans fil,
dans lequel le dispositif électronique portable (120, 220, 300, 402, 1400) comprend en outre un module de capteur (1420) incluant un accéléromètre et un microphone, l'application PVT :
accédant à l'accéléromètre et au microphone et caractérisant les signaux de vibration et audio captés pour déterminer la signature en termes de vibration et audio du véhicule pour différencier entre des mouvements de piéton et de véhicule ; et
réinitialisant les événements d'enregistrement faux et confirmant l'état à bord.

4. Procédé selon la revendication 3, comprenant en outre l'ajout d'une estampille temporelle au fichier journal.

5. Progiciel comprenant des instructions exécutables par processeur qui, lorsqu'elles sont exécutées sur un processeur, forcent le processeur à mettre en oeuvre un procédé selon l'une quelconque des revendications 3 ou 4.

6. Dispositif électronique portable (120, 220, 300, 402, 1400) comprenant
une bobine de communication en champ proche configurée pour lire des informations à partir d'une étiquette lisible par machine, lors de la présentation du dispositif électronique portable à l'étiquette lisible par machine (102, 106, 108, 232, 242, 252, 262, 272, 282, 500, 700) pendant un événement d'enregistrement, l'étiquette lisible par machine (102, 106, 108, 232, 242, 252, 262, 272, 282, 500, 700) étant associée à au moins un service pour un trajet à bord d'un véhicule, le véhicule étant un bus, un train ou un ferry ; et
un processeur configuré pour :
authentifier l'étiquette lisible par machine, dans lequel l'authentification de l'étiquette lisible par machine (102, 106, 108, 232, 242, 252, 262, 272, 282, 500, 700) comprend la comparaison d'informations stockées sur le dispositif électronique portable avec des informations stockées sur l'étiquette lisible par machine (102, 106, 108, 232, 242, 252, 262, 272, 282, 500, 700) pour vérifier si les informations stockées sur le dispositif électronique portable (120, 220, 300, 402, 1400) indiquent que l'utilisateur dispose d'un ticket valide pour un service associé à l'étiquette lisible par machine (102, 106, 108, 232, 242, 252, 262, 272, 282, 500, 700) ;
mettre à jour l'état d'une application de terminal de validation personnel "PVT" qui est exécutée par le dispositif électronique portable à "à bord" suite à l'authentification de l'étiquette lisible par machine (102, 106, 108, 232, 242, 252, 262, 272, 282, 500, 700), l'état à bord indiquant qu'un passager qui a présenté le dispositif électronique portable (120, 220, 300, 402, 1400) est à bord du véhicule ;
générer un fichier journal contenant les informations lues à partir de l'étiquette lisible par machine (102, 106, 108, 232, 242, 252, 262, 272, 282, 500, 700) ; et
stocker le fichier journal dans une mémoire sur le dispositif électronique portable, le dispositif électronique portable comprenant une antenne sans fil configurée pour envoyer une indication du fichier journal sur un serveur via un réseau sans fil,
dans lequel le dispositif électronique portable (120, 220, 300, 402, 1400) comprend en outre un module de capteur (1420) incluant un accéléromètre et un microphone, l'application PVT étant configurée pour :
accéder à l'accéléromètre et au microphone et caractériser les signaux de vibration et audio captés pour déterminer la signature en termes de vibration et audio du véhicule pour différencier entre des mouvements de piéton et de véhicule ; et
réinitialiser des événements d'enregistrement faux et confirmer l'état à bord.
